# EUROPEAN PATENT APPLICATION

(11) **EP 4 717 132 A1**
(43) Date of publication of application: **01.04.2026**
(21) Application number: 24212434.5
(22) Date of filing: 12.11.2024
(51) Int. Cl.: A47J 37/06

(54) **MULTIFUNCTIONAL AIR FRYER**

(30) Priority: 26.09.2024 CN 202422355575 U
(71) Applicant: NingBo KeBao Electronic Co., Ltd, Yuyao City, Zhejiang Province (CN)
(72) Inventor: ZHAO, Jifeng, Yuyao City, 315400 (CN); ZHENG, Jiahao, Yuyao City, 315400 (CN)
(74) Representative: Valet Patent Services Limited

(57) **Abstract**

The present invention discloses a multifunctional air fryer which comprises a host. An upper heating cavity and a lower heating cavity are arranged in the host; front ends of the upper heating cavity and the lower heating cavity are open; an air guiding hood and a motor base distributed front and back are installed in a rear end of the host; a motor is installed at the upper and lower ends of the motor base respectively; a fan blade assembly is installed at the upper and lower ends of the air guiding hood respectively; output shafts at the front ends of the motors are connected with the fan blade assemblies; the upper end of the upper heating cavity and the upper end of the lower heating cavity are communicated with the air guiding hood; the upper end of the upper heating cavity and the upper end of the lower heating cavity are provided with an upper heating body and a lower heating body respectively; rear ends of the upper heating cavity and the lower heating cavity are provided with a circulating suction outlet respectively; and the circulating suction outlets are located in front of the air guiding hood. When the upper heating body and the lower heating body are operated, the motors drive the fan blade assemblies to rotate; the generated wind blows the upper heating body and the lower heating body through the air guiding hood; and the hot wind blows the upper heating cavity and the lower heating cavity from top to bottom, so that the hot wind is circulated in the upper heating cavity and the lower heating cavity, and the food is heated more evenly.

## Description

### TECHNICAL FIELD

The present invention relates to an air fryer, in particular to a multifunctional air fryer.

### BACKGROUND

In the current market, a double-pot air fryer has a higher capacity than a single-pot air fryer, can cook different ingredients at the same time, and is loved by consumers. However, most double-pot air fryers on the market are left-right structures, which will take up more kitchen space. Of course, there are also a part of double-pot air fryers which have cavities of up-down structures on the market. Although the occupied space is greatly reduced, the heating elements are placed at the rear end of the cavities and the loss is large in the heat transfer process. Thus, the ingredients are unevenly heated.

### SUMMARY

In view of the defects in the prior art, the purpose of the present invention is to provide a multifunctional air fryer.

The technical solution of the present invention is as follows: the multifunctional air fryer comprises a host; an upper heating cavity and a lower heating cavity distributed up and down are arranged in the host; front ends of the upper heating cavity and the lower heating cavity are open; an air guiding hood and a motor base distributed front and back are installed in a rear end of the host; a motor is installed at the upper and lower ends of the motor base respectively; a fan blade assembly is installed at the upper and lower ends of the air guiding hood respectively; output shafts at the front ends of the motors are connected with the fan blade assemblies; the upper end of the upper heating cavity and the upper end of the lower heating cavity are communicated with the air guiding hood; the upper end of the upper heating cavity and the upper end of the lower heating cavity are provided with an upper heating body and a lower heating body respectively; rear ends of the upper heating cavity and the lower heating cavity are provided with a circulating suction outlet respectively; and the circulating suction outlets are located in front of the air guiding hood.

Further, an upper heat insulation plate bracket is installed at the upper end of the upper heating cavity; an upper heat insulation plate is fixed on the upper heat insulation plate bracket; the upper heating body is installed on the upper heat insulation plate; a lower heat insulation plate bracket is installed at the upper end of the lower heating cavity; a lower heat insulation plate is fixed on the lower heat insulation plate bracket; and the lower heating body is installed on the lower heat insulation plate.

Further, a right end of the air guiding hood is provided with an air outlet, a right end of the motor base is provided with an exhaust outlet, a right rear end of the host is provided with a heat dissipation port, and the exhaust outlet and the air outlet are communicated with the heat dissipation port.

Further, drawer type pot bodies are put into the upper heating cavity and the lower heating cavity;
or, turnover doors are detachably installed at the front openings of the upper heating cavity and the lower heating cavity;
or, a drawer type pot body is put into the upper heating cavity, and a turnover door is detachably installed at the front opening of the lower heating cavity;
or, a drawer type pot body is put into the lower heating cavity, and a turnover door is detachably installed at the front opening of the upper heating cavity.

The multifunctional air fryer provided by the present invention has the following beneficial effects: when the upper heating body and the lower heating body are operated, the motors drive the fan blade assemblies to rotate; the generated wind blows the upper heating body and the lower heating body through the air guiding hood; and the hot wind blows the upper heating cavity and the lower heating cavity from top to bottom, so that the hot wind is circulated in the upper heating cavity and the lower heating cavity, and the food is heated more evenly.

### BRIEF DESCRIPTION OF DRAWINGS

Fig. 1 is an integral structural schematic diagram of embodiment 1 of the present invention;
Fig. 2 is a sectional view of embodiment 1 of the present invention;
Fig. 3 is a sectional structural diagram of embodiment 1 of the present invention;
Fig. 4 is a structural schematic diagram of a drawer type pot body of the present invention;
Fig. 5 is a structural schematic diagram of an air guiding hood of the present invention;
Fig. 6 is a structural schematic diagram of a motor base of the present invention;
Fig. 7 is an integral structural schematic diagram of embodiment 2 of the present invention;
Fig. 8 is a local exploded schematic diagram of embodiment 2 of the present invention;
Fig. 9 is an integral structural schematic diagram of embodiment 3 of the present invention;
Fig. 10 is an integral structural schematic diagram of embodiment 4 of the present invention.

As shown in the drawings: 1 - host; 2 - upper heating cavity; 3 - lower heating cavity; 4 - air guiding hood; 41 - air outlet; 42 - upper air guiding port; 43 - lower air guiding port; 5 - motor base; 51 - air exhaust; 6 - motor; 7 - fan blade assembly; 8 - upper heating body; 9 - lower heating body; 10 - circulating suction outlet; 11 - upper heat insulation plate bracket; 12 - upper heat insulation plate; 13 - lower heat insulation plate bracket; 14 - lower heat insulation plate; 15 - heat dissipation port; 16 - drawer type pot body; 161 - through hole; 162 - handle; 17 - turnover door; 18 - touch panel..

### DESCRIPTION OF EMBODIMENTS

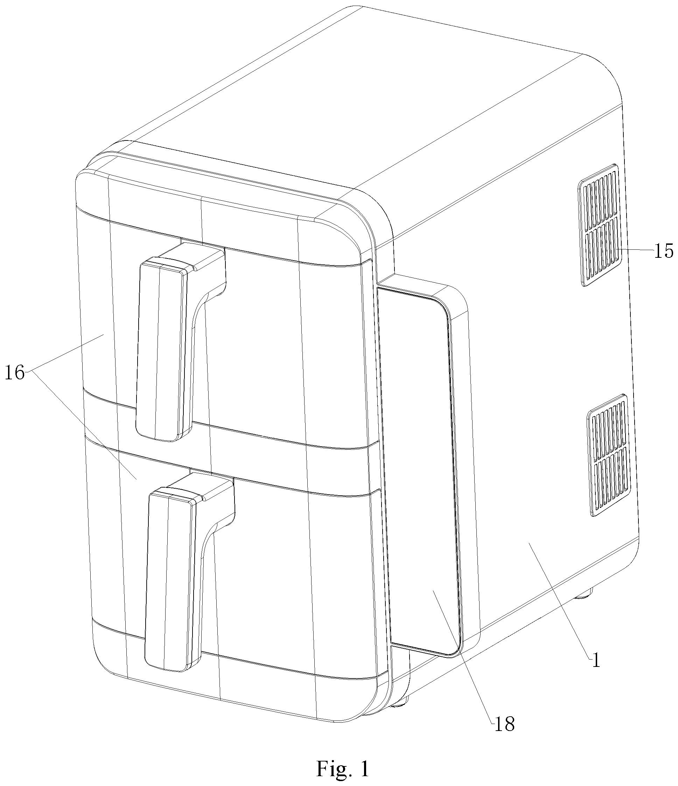

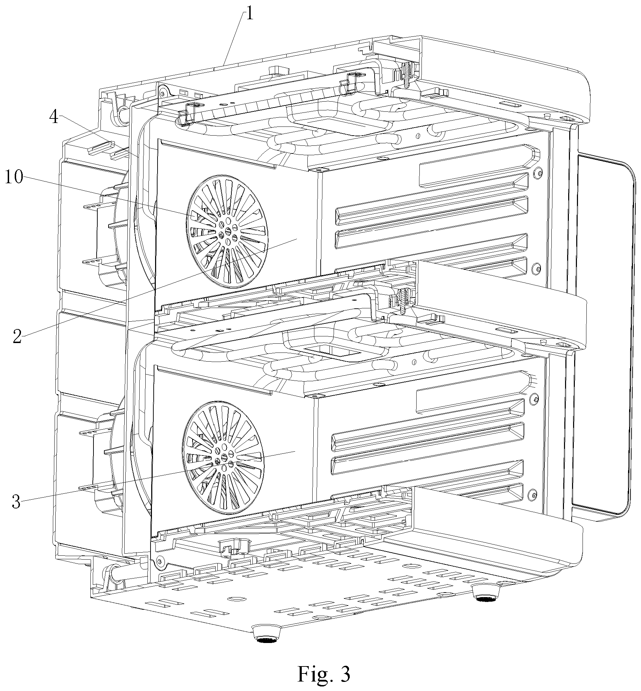

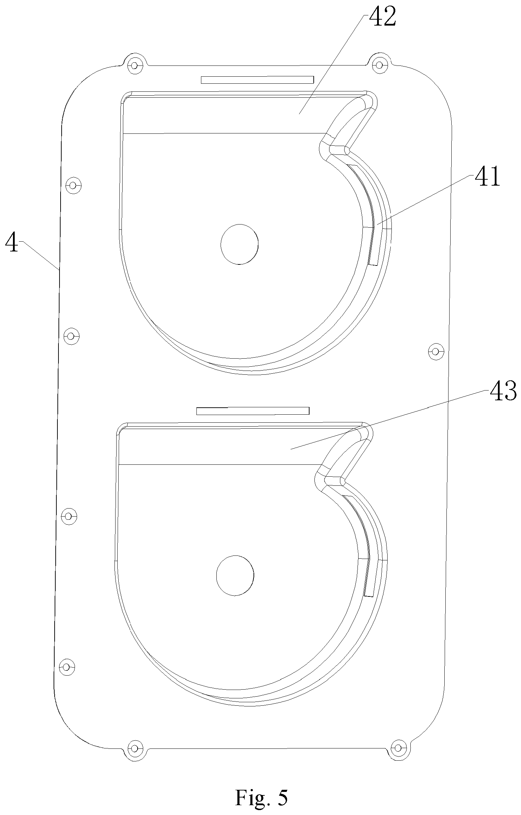

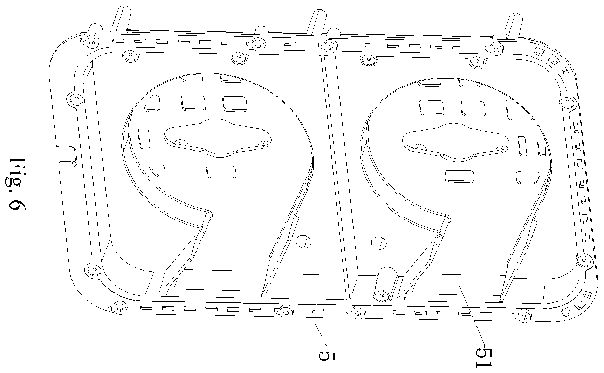

In order to understand the technical solution of the present invention more intuitively and completely, the non-restrictive features are described as follows in combination with the drawings of the present invention:
Embodiment 1: As shown in Fig. 1 to Fig. 6, the multifunctional air fryer comprises a host 1; an upper heating cavity 2 and a lower heating cavity 3 distributed up and down are arranged in the host 1; front ends of the upper heating cavity 2 and the lower heating cavity 3 are open; an air guiding hood 4 and a motor base 5 distributed front and back are installed in a rear end of the host 1; a motor 6 is installed at the upper and lower ends of the motor base 5 respectively; a fan blade assembly 7 is installed at the upper and lower ends of the air guiding hood 4 respectively; output shafts at the front ends of the motors 6 are connected with the fan blade assemblies 7; the upper end of the upper heating cavity 2 and the upper end of the lower heating cavity 3 are communicated with the air guiding hood 4; the upper end of the upper heating cavity 2 and the upper end of the lower heating cavity 3 are provided with an upper heating body 8 and a lower heating body 9 respectively; rear ends of the upper heating cavity 2 and the lower heating cavity 3 are provided with a circulating suction outlet 10 respectively; and the circulating suction outlets 10 are located in front of the air guiding hood 4.

The upper end of the air guiding hood 4 is provided with an upper air guiding port 42 communicated with the upper end of the upper heating cavity 2, and the middle of the air guiding hood 4 is provided with a lower air guiding port 43 communicated with the upper end of the lower heating cavity 3.

An upper heat insulation plate bracket 11 is installed at the upper end of the upper heating cavity 2; an upper heat insulation plate 12 is fixed on the upper heat insulation plate bracket 11; the upper heating body 8 is installed on the upper heat insulation plate 12; a lower heat insulation plate bracket 13 is installed at the upper end of the lower heating cavity 3; a lower heat insulation plate 14 is fixed on the lower heat insulation plate bracket 13; and the lower heating body 9 is installed on the lower heat insulation plate 14.

As shown in Fig. 1, Fig. 5 and Fig. 6, a right end of the air guiding hood 4 is provided with an air outlet 41, a right end of the motor base 5 is provided with an exhaust outlet 51, a right rear end of the host 1 is provided with a heat dissipation port 15, and the exhaust outlet 51 and the air outlet 41 are communicated with the heat dissipation port 15.

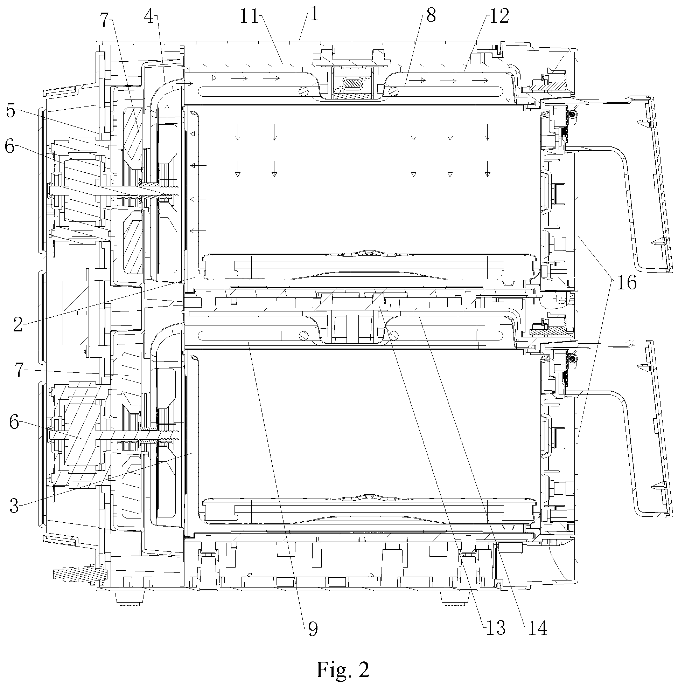

As shown in Fig. 2, drawer type pot bodies 16 are put into the upper heating cavity 2 and the lower heating cavity 3.

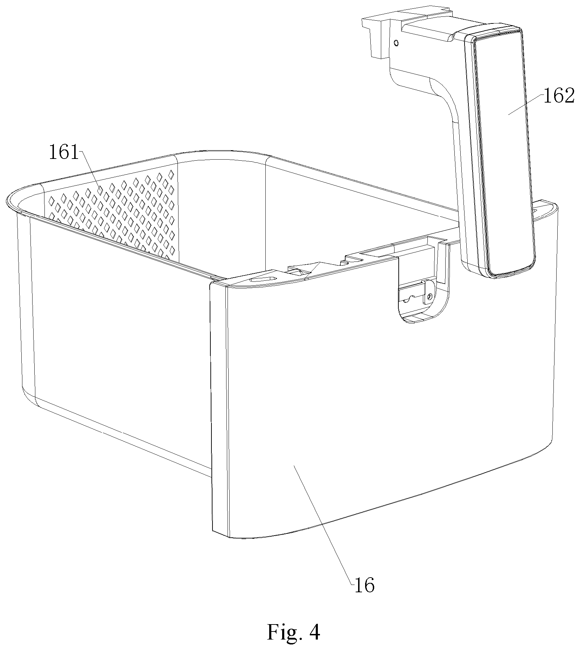

As shown in Fig. 4, through holes 161 perforated front and back are arranged at the rear end of the drawer type pot body 16.

As shown in Fig. 1, a touch panel 18 is installed at the right front end of the host 1.

As shown in Fig. 4, a handle 162 is detachably installed at the front end of the drawer type pot body 16. After the handle 162 is removed, the handle can be put into the drawer type pot body 16 to reduce the size of product package, which can reduce transportation cost.

In the multifunctional air fryer provided by the present invention, when the upper heating body 8 and the lower heating body 9 are operated, the motors 6 drive the fan blade assemblies 7 to rotate; the generated wind blows the upper heating body 8 and the lower heating body 9 through the air guiding hood 4; and the hot wind blows the upper heating cavity 2 and the lower heating cavity 3 from top to bottom, so that the hot wind is circulated in the upper heating cavity 2 and the lower heating cavity 3, and the food is heated more evenly. Part of the hot wind is discharged through the through holes 161 at the rear ends of the drawer type pot bodies 16 and the circulating suction outlets 10.

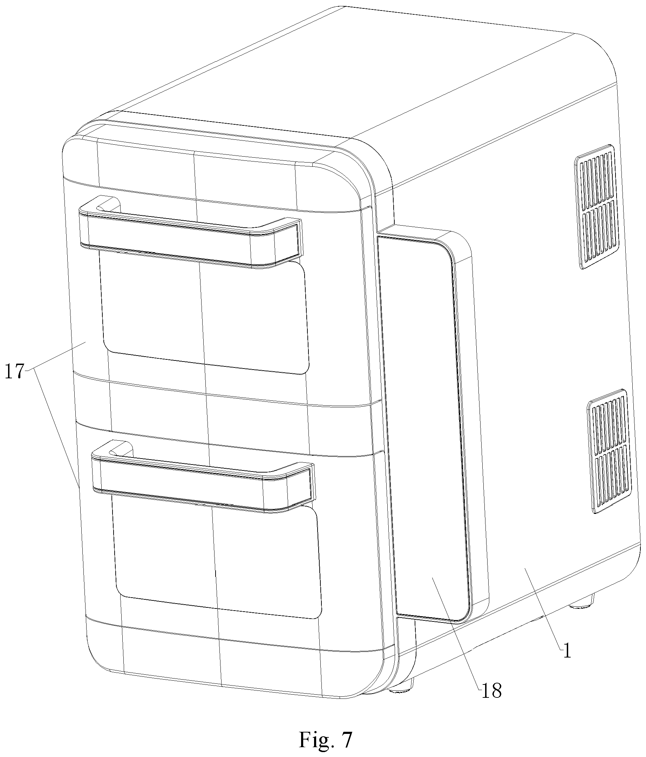

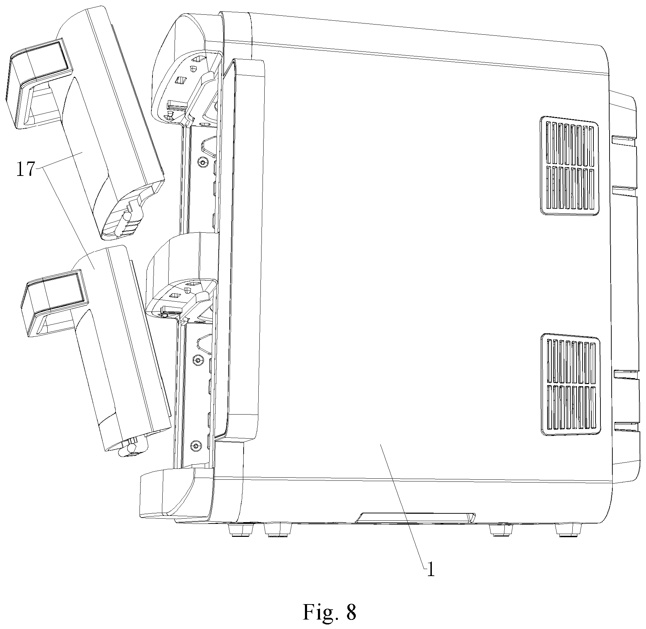

Embodiment 2: As shown in Fig. 7 and Fig. 8, the difference between embodiment 2 and embodiment 1 is that turnover doors 17 are detachably installed at the front openings of the upper heating cavity 2 and the lower heating cavity 3, which can realize the functions of two electric ovens.

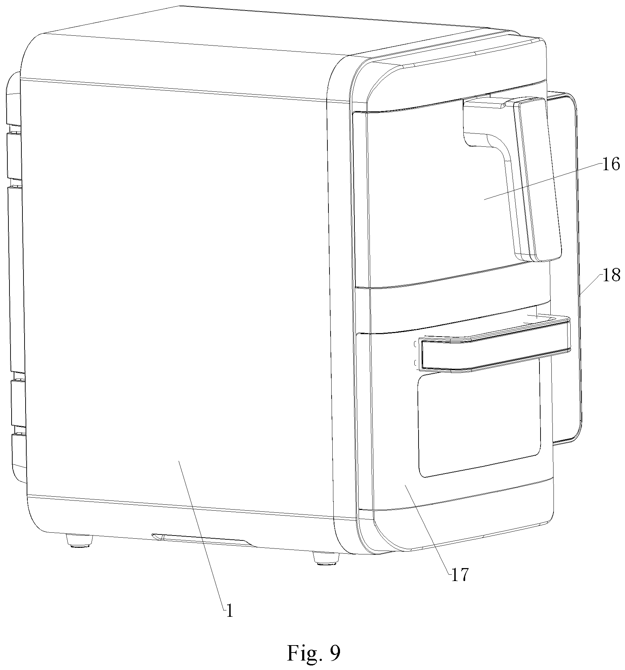

Embodiment 3: As shown in Fig. 9, the difference between embodiment 3 and embodiment 1 is that the drawer type pot body 16 is put into the upper heating cavity 2, and the turnover door 17 is detachably installed at the front opening of the lower heating cavity 3. The upper heating cavity 2 achieves the functions of the air fryer, and the lower heating cavity 3 achieves the functions of the electric oven.

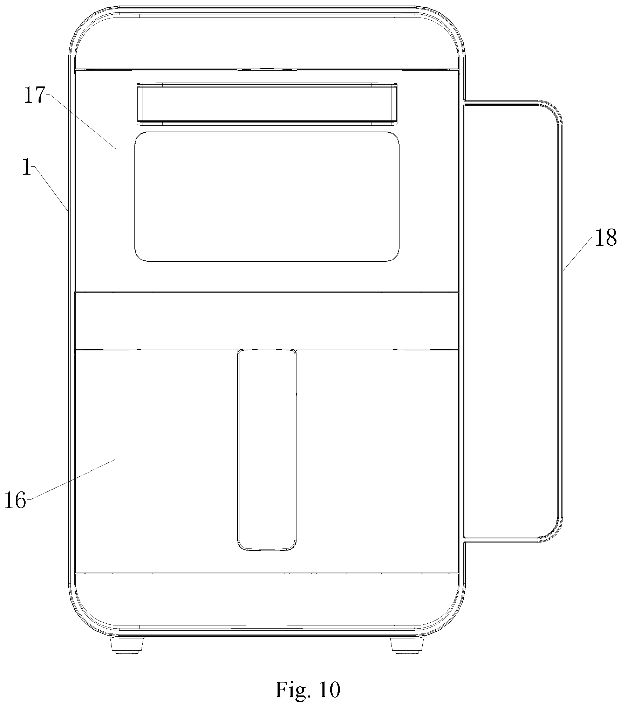

Embodiment 4: As shown in Fig. 10, the difference between embodiment 4 and embodiment 1 is that the drawer type pot body 16 is put into the lower heating cavity 3, and the turnover door 17 is detachably installed at the front opening of the upper heating cavity 2. The lower heating cavity 3 achieves the functions of the air fryer, and the upper heating cavity 2 achieves the functions of the electric oven.

Of course, the above only describes the preferred embodiments of the present invention, and does not limit the scope of the patent of the present invention. All simple modifications and equivalent structural changes made by using the description and schematic content of the present invention shall be included within the protection scope of the patent of the present invention in the same way.

## Claims

1. A multifunctional air fryer, comprising a host, wherein an upper heating cavity and a lower heating cavity distributed up and down are arranged in the host; front ends of the upper heating cavity and the lower heating cavity are open; an air guiding hood and a motor base distributed front and back are installed in a rear end of the host; a motor is installed at the upper and lower ends of the motor base respectively; a fan blade assembly is installed at the upper and lower ends of the air guiding hood respectively; output shafts at the front ends of the motors are connected with the fan blade assemblies; the upper end of the upper heating cavity and the upper end of the lower heating cavity are communicated with the air guiding hood; the upper end of the upper heating cavity and the upper end of the lower heating cavity are provided with an upper heating body and a lower heating body respectively; rear ends of the upper heating cavity and the lower heating cavity are provided with a circulating suction outlet respectively; and the circulating suction outlets are located in front of the air guiding hood.

2. The multifunctional air fryer according to claim 1, wherein an upper heat insulation plate bracket is installed at the upper end of the upper heating cavity; an upper heat insulation plate is fixed on the upper heat insulation plate bracket; the upper heating body is installed on the upper heat insulation plate; a lower heat insulation plate bracket is installed at the upper end of the lower heating cavity; a lower heat insulation plate is fixed on the lower heat insulation plate bracket; and the lower heating body is installed on the lower heat insulation plate.

3. The multifunctional air fryer according to claim 1, wherein a right end of the air guiding hood is provided with an air outlet, a right end of the motor base is provided with an exhaust outlet, a right rear end of the host is provided with a heat dissipation port, and the exhaust outlet and the air outlet are communicated with the heat dissipation port.

4. The multifunctional air fryer according to claim 1, wherein drawer type pot bodies are put into the upper heating cavity and the lower heating cavity;
or, turnover doors are detachably installed at the front openings of the upper heating cavity and the lower heating cavity;
or, a drawer type pot body is put into the upper heating cavity, and a turnover door is detachably installed at the front opening of the lower heating cavity;
or, a drawer type pot body is put into the lower heating cavity, and a turnover door is detachably installed at the front opening of the upper heating cavity.
